Europäisches Patentamt

European Patent Office

Office européen des brevets

(11) Publication number: **0 620 383 A2**

# EUROPEAN PATENT APPLICATION

(21) Application number: **94110765.8**

(22) Date of filing: **25.07.91**

(51) Int. Cl.5: **F16H 15/56, F16H 13/06**

This application was filed on 110794 as a divisional application to the application mentioned under INID code 60.

(30) Priority: **25.07.90 CN 90104953**

(43) Date of publication of application:
**19.10.94 Bulletin 94/42**

(60) Publication number of the earlier application in accordance with Art.76 EPC: **0 468 511**

(84) Designated Contracting States:
**CH DE FR GB IT LI SE**

(71) Applicant: **Zheng, Yue**
**Room 105, Building 15(old),**
**Beicun,**
**Nankai University**
**Tianjin (CN)**
Applicant: **Li, Yunzao**
**Room 105 Building 15 (old),**
**Beicun,**
**Nankai University**
**Tianjin (CN)**

(72) Inventor: **Zheng, Yue**
**Room 105 Building 15 (old)**
**Beicun, Nankai Uni.**
**Tianjin (CN)**

(74) Representative: **Liesegang, Roland, Dr.-Ing.**
**FORRESTER & BOEHMERT**
**Franz-Joseph-Strasse 38**
**D-80801 München (DE)**

(54) **Centrifugal planetary friction transmission.**

(57) A centrifugal planetary friction transmission comprising an input shaft, an output shaft, at least a rotating arm, at least one irrotational internal friction pulley, at least one rotatable internal friction pulley, at least one set of linked planetary external friction pulleys rotating about its axis and orbiting about an axis of the internal friction pulleys, said at least one set of external friction pulleys having radially floating means so as to float radially and to engage with said internal friction pulleys under the action of centrifugal force, characterized in that only one of said irrotational internal friction pulleys and one of said rotatable internal friction pulleys engage with said external friction pulleys during transmitting, said one of rotatable internal friction pulleys outputting the power, said planetary external friction pulleys being at least a set of external friction pulleys which is formed by at least three coaxially linked cylindrical external pulleys, of which two being in engagement condition, and other being in non-engagement condition, either said internal frictional pulley set or said external friction pulley set being slidable along the axial direction so as to form a separable friction pulley pair, the slide causing the change of the engagement condition between the slidable friction pulley set and the non-slidable friction pulley set to shift the transmission ratio of the transmission.

The transmission according to this invention have high efficiency and can be shifted without cutting out the load.

*Fig 1*

The invention relates to a centrifugal planetary friction transmission, particularly to a centrifugal planetary friction transmission having an input shaft, an output shaft, at least a rotating arm, at least one irrotational internal friction pulley, at least one set of linked planetary external friction pulleys rotating about its axis and orbiting about an axis of the internal friction pulleys, said at least one set of external friction pulleys having radially floating means so as to float radially and to engage with said internal friction pulleys under the action of centrifugal force.

## Background of the invention

US4733579 has disclosed a variable speed drive comprising an input shaft and an output shaft which have a common central axis. The input shaft is provided with an eccentric extension rotatably supporting a rigid combination of internal ring-gears, which combination is allowed to rotate about the off -set axis while it rotates about the common axis. The first external gear nonrotatably mounted on the output shaft is disposed within and engages the first internal gear, and other external gears are disposed within and engages other corresponding internal gears. The extensions of the other external gears is engageble with brake means. Though the different combination of the engagement of the brake means, the output shaft may be rotated forward, reversely, or at variable speed. However, the adjacent pairs of frictional pulleys are respectively provided with frictional surfaces tapared in opposite direction, and between adjacent pairs of friction pulleys there is provided a spring so as to make the friction pulley have normal pressure for producing the friction force. Since the frictional coefficient is small, the spring force is normally greater than the frictional force by an order of magnitude, thus the load of the bearing for transmitting the spring forces is too great, the efficient is low, the transmission is heated and life is short. The relative slide friction between the frictional pulleys may aggravate such problems.

Moreover, due to the restriction of spring force, and the friction force is small than the spring force by an order of magnitude, the friction torque is small and the output torque moment of the transmission is unsufficient.

## Summary of the invention

The object of the invention is to overcome the deficiencies of the prior art and provide a mechanical variable speed drive having high efficiency, which can be shifted without cutting out the load.

In order to realize the object mentioned above, the invention provides a centrifugal planetary friction transmission comprising an input shaft, an output shaft, at least a rotating arm, at least one irrotational internal friction pulley, at least one rotatable internal friction pulley, at least one set of linked planetary external friction pulleys rotating about its axis and orbiting about an axis of the internal friction pulleys, said at least one set of external friction pulleys having radially floating means so as to float radially and to engage with said internal friction pulleys under the action of centrifugal force, characterized in that only one of said irrotational internal friction pulleys and one of said rotatable internal friction pulleys engage with said external friction pulleys during transmitting, said one of rotatable internal friction pulleys outputting the power, said planetary external friction pulleys being at least a set of external friction pulleys which is formed by at least three coaxially linked cylindrical external pulleys, of which two being in engagement condition, and other being in non-engagement condition, either said internal frictional pulley set or said external friction pulley set being slidable along the axial direction so as to form a separable friction pulley pair, the slide causing the change of the engagement condition between the slidable friction pulley set and the non-slidable friction pulley set to shift the transmission ratio of the transmission.

Said internal friction pulleys and said external friction pulleys are preferably disposed to make the distance between the centres of said internal friction pulley and said external friction pulley which are engaged is unchanged through said slide along the axial direction thus the eccentric distance of said planetary friction pulleys being unchanged before and after the shift.

Part of said internal friction pulleys are axially slidable, and said external friction pulleys are axialy unslidable, or vise versa, ie. said external friction pulleys are axially slidable, and said internal friction pulleys are axially unslidable.

Referably, on both the side of said rotatable internal friction pulleys and the side of said irrotational internal friction pulleys there are provided a certain pair of separable friction pulleys and both said rotatable internal friction pulleys and said irrotational internal friction pulleys are axially slidable relative to said planetary external friction pulleys so that the separating or engagement of any pair of separable friction pulleys causes a change of the transmission ratio of the transmission and the total number of shifting speed ratio is a product of the number of separable friction pulley pairs on the side of rotatable internal friction pulleys and the number of separable friction pulley pairs on the side of irrotational internal friction pulleys.

If K pairs of separable friction pulley pairs are disposed respectively on both the side of irrotational internal friction pulleys and the side of rotatable internal friction pulleys, the separable friction pulleys pairs on both the side of rotatable internal friction pulleys and the side of irrotational internal friction pulleys being able to separate or engage so as to change the transmission ratio of the transmission, and such an axial slide at both sides of rotatable and irrotation internal friction pulleys changing the distance between the centers of the friction pulleys which are engaged, so that the eccentric distance of the planetary friction pulleys may change through the shift, and the number of shifting speed ratio is K.

Preferably, the transmission further comprises other separable friction pulley pairs, of which the accentric distance is unchanged through shifting, and which are disposed at either the side of rotatable friction pulleys or the side of irrotatable friction pulleys to obtain more variable speed ratio through the separation or engagement of friction pulley pairs by ralative axial slide.

The transmission may further comprise a helical gear pair, of which the internal and external gear connect respectively with an input shaft and an output shaft of the gear pair, and a compression spring being disposed between the side surface of the external gear and the internal gear, the input shaft of the gear pair being axial slidable, the helical gear pair transmitting the torque of said transmission when the torque is changed, the engaging axial force of the helical gear pair being changed and put into a coaction with the compression spring to move axially the axial slidable gear shaft so as to move axially the relative parts of the transmission to change the transmission ratio.

In the transmission, it is advantageous that at least one friction pulley pair have a diameter which are so determined as to make the output shaft backrun so that the transmission has a reverse shift.

If the transmission further comprises a freely rotatable internal friction pulley or external friction pulley which does not contact with other elements, when it enters into friction contact, the speed variator is located in an idle position.

The friction pulleys of said separable friction pulleys pair may have edges of contact sides with larger chamfer or curved surface so as to make the friction pulley pairs come easily into contact.

The transmission according to the invention uses a great centrifugal force produced by the planetary friction pulleys to be rotated at high speed themselves for the normal pressure so that the bearings bear no normal pressure, and no relative slip friction is produced between the friction pulleys, thus the effeciency, the life and the output torque moment are greatly increased.

## Description of the drawings

These and other advantages and features of this invention will be apparent when reference is made to the following detail description and accompanying drawings, in which:

Figure 1 is a schematic view of a conventional friction pulleys transmission having a fixed speed radio;

Figure 2 shows an embodiment of the speed variable friction transmission according to the invention;

Figure 3 shows another embodiment of the speed variable friction transmission according to the invention;

Figure 4 shows an automatically shifting means formed by the speed variable friction transmission according to the invention.

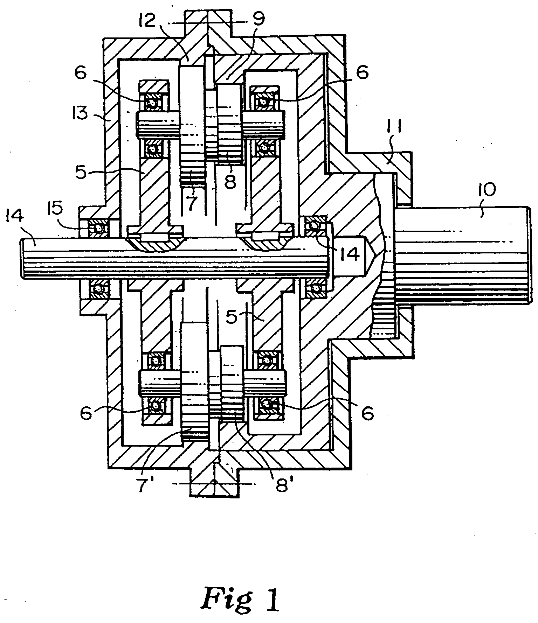

In the attached drawings, Figure 1 shows a conventional friction pulleys transmission having a fixed speed radio. Said transmission is of double internal contact type. External-friction pulleys 7, 8 and 7', 8' are coaxially and fixedly connected with each other respectively to form two duplex planet friction pulley sets with same structures. They are supported by the rotating arm 5 via the shaft through the planet bearings 6. The rotating arm 5 connects fixedly with the input shaft 4 to keep the axle of each duplex planet friction pulley set parallel to the axle of input shaft and the distance between the axle of the pulley and the axle of the input shalt (eccentric distance) for both pulleys sets equal. The input shaft 4 is supported by the left housing 13 and the output shaft 10 by means of bearings 15, 14. An internal-friction pulley 12 which is integral with the left housing 13 contacts simultaneously with external-friction pulleys 7, 7'. An internal-friction pulley 9 which is integral with output shaft 10 contacts simultaneously with external friction pulleys 8, 8'. The output shaft 10 is supported by right housing 11.

When the output shaft 4 rotates at a high speed, the rotation arm 5 drives both the duplex planet friction pulley sets to orbit. The external friction pulleys 7, 7' rotate and are forced towards the inner circumference of the internal-friction pulley 12 under the action of centrifugal force. The coaction of orbit and rotation makes external-friction pulleys 8, 8' drive the internal-friction pulley 9 to rotate at a low speed, thus the centrifugal planetary friction drive is established.

The centrifugal planetary friction transmission of this invention is used for shifting transmission. For double internal-contact means (see Fig. 1), there are two kinds of shifting modes to meet the condition of equal eccentric distance. The first mode keeps the eccentric distance constant with changing simultaneously the value of $r_1$, $r_2$ and/or

$r_3$, $r_4$, wherein $r_1$-radio of the external pulley of the first friction pulley pair, $r_2$-radio of the internal pulley of the first friction pulley pair, $r_3$-radio of the external pulley of the second friction pulley pair, and $r_4$-radio of the internal pulley of the second friction pulley pair. The second mode makes eccentric distance vary companying changing the values of r1, r3 and/or r2, r4.

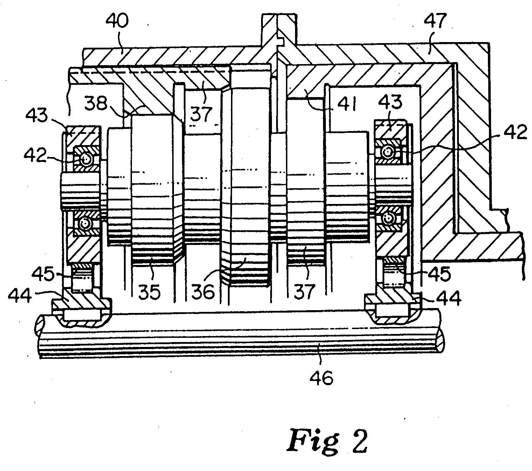

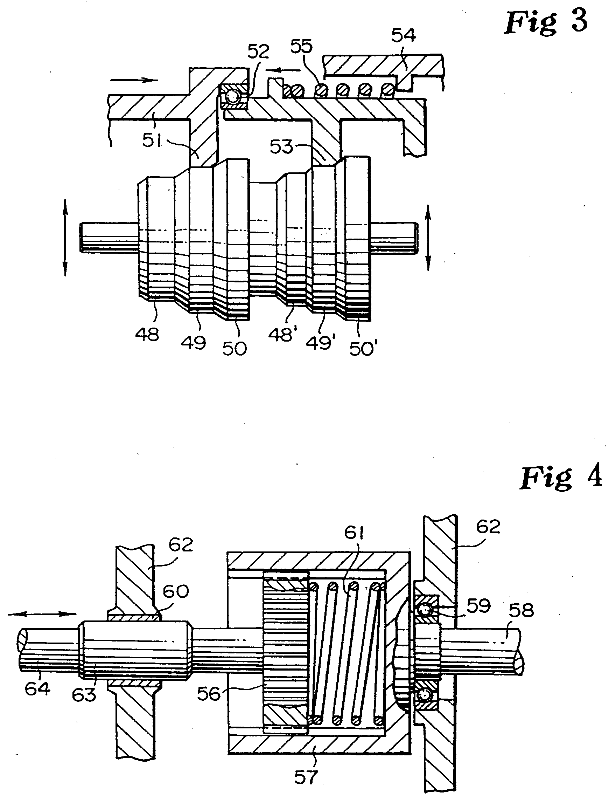

The principle of the first mode is shown in Fig. 2 which is a partial sectional view and in which portions having nothing to do with the feature of the structure have been deleted. Some parts of the structure of Fig. 2 which are similar to those shown in Fig. 1 are also deleted. The external-friction pulleys 35, 36, 37 are linked up coaxially to form a triple planet friction pulley set. They are supported on rotating arm 44 with the axle through planet bearing 42 and radially floating sliding block 43, and revolve by drive of input shaft 46. The function of spring 45 is to make the planet friction pulley contact with inner wall of internal friction pulley under static condition and to increase the friction force during work condition. External -friction pulley 37 contacts with the rotatable internal friction pulley 41 formed integrally with the input shaft. Internal-friction pulley 41 is supported by right housing 47. Internal-friction pulleys 38, 39 are linked up coaxially to form a double internal-friction pulley set whose external circumference is provided slidingly inside left housing 40. The double friction pulley may slide axially with the aid of a key but it can not rotate. In the position shown in Fig. 2 the inner circumference of internal-friction pulley 38 contacts with planet friction pulley 35. When the double internal-friction pulley slides axially rightward, the inner circumference of internal-friction pulley 39 contacts with planet friction pulley 36, the external-friction pulley 36 removes rightward and separates from pulley 35. In this time the variation of r1, r2 makes the speed ratio vary though the eccentric distance has not been varied. In Fig. 2, two pairs of separable friction pulley pairs 35-38, 36-39 are formed so that there are two shifting speed ratio value. When the number of separable friction pulley pairs increases, the number of shifting ratio increases accordingly. In light of the same principle and similar structure, a plurality of separable frcition pulley pairs may be disposed on the side of rotatable internal-friction pulley. When the separable friction pulley pairs are disposed on both sides and their separation movements are independent of each other, the total number of shifting speed ratio is a product of the numbers of separable friction pulley pairs on the both sides. For separable friction pulley pair, the shifting function may also be obtained through the way in which external-friction pulley may slide axially and the internal-friction pulley is immobile axially. As the eccentric distance is constant the radius difference of all internal- and external-friction pulleys should be equal. In order to make the friction pulley pairs coming easily into contact, the edge of contact sides of the friction pulleys of all separable friction pulley pairs should have larger chamfer and transits smoothly with inclined plane or curved surface (see right side of external-friction pulley 35 and internal-friction pulley 39 and left side of external-friction pulley 36 and internal-friction pulley 38, as shown in Fig. 2, also the left side of the six outer friction pulleys shown in Fig. 3 ).

The principle of the second shifting mode is shown in Fig. 3 which is a partial sectional view in which the portions having nothing to do with the feature of the structure have been deleted. External-friction pulleys 48, 49, 50, 48', 49', 50' are linked up coaxially to form a hexad planet friction pulley set. Internal friction pulley 51 which can not rotate connects to rotatable internal-friction pulley 53 through bearing 52. The compression spring 55 is disposed between pulley 53 and housing 54. Friction pulleys 51, 53 with the bearing 52 therebetween may slide axially as shown by the horizontal arrow, they move leftward under the action of the force of spring 55 or move rightward under the action of external thrust. As shown by the vertical arrow, the hexad planet friction pulley set may remove radially. That is to say they move upward under the action of centrifugal force or move downward under a force caused by internal-friction pulleys when the latter are move rightward, thus the eccentric distance is also changed. Accordingly, the radially floating means should have larger sliding path. In the position shown in Fig. 3, pulley 51 contacts with pulley 49, pulley 53 with pulley 49', and the transmission has a determined speed ratio. When internal-friction pulleys 51, 53 and the bearing 52 therebetween move leftward, pulley 51 contacts with pulley 48, pulley 53 with pulley 48'. Under the action of centrifugal force the hexad planet friction pulley set slides upward and contacts tightly with internal-friction pulleys so that the transmission obtains another speed ratio. When pulleys and bearing 51-53 move rightward, the hexad planet friction pulley set is pushed downward, internal-friction pulley 51 contacts with pulley 50, pulley 53 with pulley 50', so that the transmission obtains third speed ratio. If K pairs of separable friction pulley pairs are disposed respectively on both the side of irrotational internal-friction pulley and the side of rotatable internal-friction pulley, the number of shifting speed ratio is K. For the separable friction pair, as the principle mentioned above, the shifting function may be also obtained through other way in which the external-friction pulley may slide axially while internal-friction pulley is immobile axially. Based on the structure shown in Fig. 3, the combination of double or multiple internal-friction pulley set (rotatable as well as irrotational) shown in Fig. 2 and multiple planet friction pulley set which may slide axially can obtain more variable speed ratios and wide shifting range.

Since the centrifugal planetary friction transmission of this invention may conveniently obtain more variable speed ratios and wide shifting range and may be speed-changed smoothly and easily during operation, it may be adopted to form a "quasi-stepless speed variator" so that it can be used more extensively, for example in the transmission system of automobile. In order to form a "quasi-stepless speed variator" used in an automobile, in addition to more variable speed ratio it is necessary that the means can shift automatically according to the load so as to obtain constant input power characteristic. For this purpose an automatically shifting means shown in Fig. 4 can be used. External-cylindrical helical gear 56 engages with internal-cylidrical helical gear (to form a gear shaft coupling when they have same number of teeth). Both gears may slide relatively to the direction of axis. The axial force resuting form engagement of said helical gears pushes gear 56 to slide rightward as shown in Fig. 4, the compression spring 61 pushes gear 56 to slide leftward as shown by the horizontal arrow. The shaft 64 linked with gear 56 is supported on frame 62 by journal 63 through bearing bushing 60, it drives gear 56 to rotate and transfers the axial force from gear 56. Shaft 64 may be formed integrally with rotatable internal-friction pulley in above-mentioned shifting means and may directly transfer the axial force to the internal-friction pulley which may axially slide but is irrotational (as shown by 38-39 in Fig. 2 and 51 in Fig. 4). When load increases, the engaged helical gear pair 56-57 generates larger axial force propotional to load applied. Through shaft 64 the force pushes the internal-friction pulley in the shifting means to move axially so as to increase the speed ratio of shifting means and to lower output rotating speed. When load decreases, the engaging axial force of the helical gear pair weakens. Through shaft 64 the spring 61 pushes the internal-friction pulley of the shifting means to axially move along other direction so as to reduce speed ratio and to increase output rotating speed, thus forming a quasi-stepless speed variator which possesses constant power output characteristic. Shaft 58 joins with helical gear 57 and is supported by frame 62 through bearing 59. In addition, through making outer helical gear immobile and interior helical gear sliding axially, the above purpose may also be reached. Changing the radii of internal and external friction pulley may make the output shaft backrun so that the speed variator has reverse shift. When a freely rotatable internal (or external) friction pulley which does not connect with other elements is disposed and said pulley enters into friction-contact, the speed variator is located in free position. The locating means of each shifting grade may be determined by way of known technique. If the means shown in Fig. 4 is used in an automobile and the external gear is provided with convex addendum so that it may be used concurrently as a substitute for a universal joint.

In order to make drive ratio keep constant, after the internal-contact friction pulley pair (in particular, dry internal friction pulley pair) is worn, following relationship between the wearing value $\Delta_1$ of the planet friction pulley whose radius is $r_1$ and the wearing value $\Delta_2$ of the internal friction pulley which engages therewith and has radius $r_1$ should be retained:

$$\Delta_1/\Delta_2 = r_1/r_2$$

For this, the materials and the heat-treatment hardness of internal and external-friction pulleys may be changed or adjusted to make the planet friction pulley harder and internal-friction pulley softer so that the wearing value can be in accordance with above proportion. In this case, even if the diameter of the pulley is worn by micrometers the drive ratio can still keep constant. And, because of the compensation of radially floating means, the driving property keeps constant, hence, increasing greatly the operating life.

The quasi-stepless speed variator of this invention may have concurrently both advantages of current hydraulic torue converter (shifting smoothly, having self-adaptability, absorbing shock and prolonging life of drive system) and the advantages of current gearbox (small volume, simple structure, and high driving efficiency). Moreover, it further has unique advantages such as overload protection (protecting engine from extinction), low noise, enabling engine to start under loading.

The centrifugal planetary friction transmission of this invention has further excellent starting property in addition to above-mentioned advantages. Since the friction force is set up gradually depending on arising rotating speed and increasing centrifugal force, and it further has the property of hydrodynamic clutch, the prime mover does not subject load during starting. Thus the prime mover does not subject load during starting. Thus the prime mover such as electric motor has excellent starting characteristic under heavy load. To sum up, it can be expected that in high-speed power transmission field the centrifugal planetary friction transmission of this invention will be substituted for gear transmission.

## Claims

1. A centrifugal planetary friction transmission comprising an input shaft, an output shaft, at least a rotating arm, at least one irrotational internal friction pulley, at least one rotatable internal friction pulley, at least one set of linked planetary external friction pulleys rotating about its axis and orbiting about an axis of the internal friction pulleys, said at least one set of external friction pulleys having radially floating means so as to float radially and to engage with said internal friction pulleys under the action of centrifugal force, characterized in that only one of said irrotational internal friction pulleys and one of said rotatable internal friction pulleys engage with said external friction pulleys during transmitting, said one of rotatable internal friction pulleys outputting the power, said planetary external friction pulleys being at least a set of external friction pulleys which is formed by at least three coaxially linked cylindrical external pulleys, of which two being in engagement condition, and other being in non-engagement condition, either said internal frictional pulley set or said external friction pulley set being slidable along the axial direction so as to form a separable friction pulley pair, the slide causing the change of the engagement condition between the slidable friction pulley set and the non-slidable friction pulley set to shift the transmission ratio of the transmission.

2. The transmission according to claim 1, wherein said internal friction pulleys and said external friction pulleys are disposed to make the distance between the centres of said internal friction pulley and said external friction pulley which are engaged is unchanged through said slide along the axial direction thus the eccentric distance of said planetary friction pulleys being unchanged before and after the shift.

3. The transmission according to claim 2, wherein part of said internal friction pulleys are axially slidable, and said external friction pulleys are axially unslidable.

4. The transmission according to claim 2, wherein said external friction pulleys are axially slidable, and said internal friction pulleys are axially unslidable.

5. The transmission according to claim 2, wherein on both the side of said rotatable internal friction pulleys and the side of said irrotational internal friction pulleys there are provided a certain pair of separable friction pulleys and both said rotatable internal friction pulleys and said irrotational internal friction pulleys are axially slidable relative to said planetary external friction pulleys so that the separating or engagement of any pair of separable friction pulleys causes a change of the transmission ratio of the transmission and the total number of shifting speed ratio is a product of the number of separable friction pulley pairs on the side of rotatable internal friction pulleys and the number of separable friction pulley pairs on the side of irrotational internal friction pulleys.

6. The transmission according to claim 1, wherein K pairs of separable friction pulley pairs are disposed respectively on both the side of irrotational internal friction pulleys and the side of rotatable internal friction pulleys, the separable friction pulleys pairs on both the side of rotatable internal friction pulleys and the side of irrotational internal friction pulleys being able to separate or engage so as to change the transmission ratio of the transmission, and such an axial slide at both sides of rotatable and irrotation internal friction pulleys changing the distance between the centers of the friction pulleys which are engaged, so that the eccentric distance of the planetary friction pulleys may change through the shift, and the number of shifting speed ratio is K.

7. The transmission according to claim 6, wherein it further comprises other separable friction pulley pairs, of which the accentric distance is unchanged through shifting, and which are disposed at either the side of rotatable friction pulleys or the side of irrotational friction pulleys to obtain more variable speed ratio through the spearation or engagement of friction pulley pairs by ralative axial slide.

8. The transmission according any one of claims 1 to 7, wherein it further comprises a helical gear pair, of which the internal and external gear connect respectively with an input shaft and an output shaft of the gear pair, and a compression spring being disposed between the side surface of the external gear and the internal gear, the input shaft of the gear pair being axial slidable, the helical gear pair transmitting the torque of said transmission, when the torque is changed, the engaging axial force of the helical gear pair being changed and put into a coaction with the compression spring to move axially the axial slidable gear shaft so as to move axially the relative parts of the transmission to change the transmission ratio.

9. The transmission according to any one of claims 1 to 7, wherein at least one friction pulley pair have a diameter which are so determined as to make the output shaft backrun so that the transmission has a reverse shift.

10. The transmission according to any one of claims 1 to 7, wherein it further comprises a freely rotatable internal friction pulley or external friction pulley which does not contact with other elements, when it enters into friction contact, the speed variator is located in an idle position.

11. The transmission according to any one of claims 1 to 10, wherein the friction pulleys of said separable friction pulleys pair have edges of content sides with larger chamfer or curved surface so as to make the friction pulley pairs come easily into contact.

12. The transmission according to any one of claims 1 to 11, wherein the planetary external pulleys are harder than the internal friction pulley contact therewith through selecting material and heat-treatment system and the ratio of both wearing values of said two pulleys substantially equals to the ratio of radii of said two pulleys.

13. A variable speed case for vehicle using the transmission according to any one of claims 8-9, wherein said case has self adaptability and can be smoothly shifted which are characteriztics of hydraulic variable speed case, and has high efficiency which is characteriztics of mechanical variable speed case, and clutch which is necessary for mechanically speed-variable vehicle may be deleted and shift under load for mechanical variable speed case may be realized.

14. The variable speed case for vehicle using the transmission according to claim 8, wherein said external gear is provided with covex addendum so that it may be used concurrently as a substitute for a universal joint.

15. The transmission according to any one of claims 1 to 12, it is used as a starter, especially a starter for electric motor which can start with load, of which the friction force is set up gradually depending on arising rotating speed and increasing centrifugal force, so as to make the prime mover, especially the electric motor have excellent starting characteristic under heavy load.

Fig 1

Fig 2

EP 0 620 383 A2

*Fig 3*

*Fig 4*